# EUROPÄISCHE PATENTSCHRIFT

(11) **EP 0 355 304 B1**
(45) Veröffentlichungstag und Bekanntmachung des Hinweises auf die Patenterteilung: **01.09.1993**
(21) Anmeldenummer: 89111153.6
(22) Anmeldetag: 20.06.1989
(51) Int. Cl.: G01M 1/06

(54) **Vorrichtung zum Antreiben eines zur Unwuchtermittlung insbesondere hochgebockten, an einem Kraftfahrzeug montierten Kraftfahrzeugrades**
Device for driving a jacket wheel, mounted on a vehicle, for determining unbalance
Dispositif d'entraînement d'une roue soulevée, montée sur un véhicule, pour la détermination du balourd

(30) Priorität: 24.08.1988 DE 3828724
(43) Veröffentlichungstag der Anmeldung: 28.02.1990
(73) Patentinhaber: HOFMANN WERKSTATT-TECHNIK GMBH, D-64319 Pfungstadt (DE)
(72) Erfinder: Goebel, Eickhart, Dipl.-Ing., D-6102 Pfungstadt (DE)
(74) Vertreter: Nöth, Heinz, Dipl.-Phys.

(56) Entgegenhaltungen:
- GB-A- 1 376 741
- US-A- 3 645 143

## Beschreibung

Die Erfindung betrifft eine Vorrichtung zum Antreiben eines zur Unwuchtermittlung, insbesondere hochgebockten, am Kraftfahrzeug montierten Kraftfahrzeugrades mit einem von einem Antriebsmotor angetriebenen Friktionsrad, das zum Antreiben des Kraftfahrzeugrades auf eine für einen Unwuchtmeßvorgang erforderliche Drehzahl an das Kraftfahrzeugrad mit einer bestimmten Anpreßkraft andrückbar ist.

Unwuchtmeßvorrichtungen zur Ermittlung der Unwuchten von am Kraftfahrzeugrad montierten Kraftfahrzeugrädern sind leicht manövrierfähige Einheiten, deren Einsatz insbesondere in den Anwendungsfällen, in denen das Abnehmen des Kraftfahrzeugrades vom Kraftfahrzeug einen relativ hohen Arbeitsaufwand erfordert, beispielsweise beim Unwuchtmessen von schweren Rädern für Lastkraftfahrzeuge oder Omnibusse sinnvoll ist. Auch kann mit derartigen Unwuchtmeßeinrichtungen auch festgestellt werden, ob das am Kraftfahrzeug noch montierte Rad überhaupt eine nennenswerte Unwucht besitzt, oder, wenn kleinere Unwuchten vorhanden sind, eine Verbesserung der Laufruhe durch Beseitigung dieser Unwuchten erreicht werden kann. Es kann auch zweckdienlich sein, bereits auf einer stationären Auswuchtmaschine ausgewuchtete Räder nach ihrer Befestigung am Kraftfahrzeug nochmals zu überprüfen und gegebenenfalls nachzuwuchten, da häufig nach der Montage des ausgewuchteten Kraftfahrzeugrades noch Unwuchten vorhanden sein können, die z. B. aus mitrotierenden Teilen am Fahrzeug resultieren können.

In aller Regel wird zumindest das zu messende Kraftfahrzeugrad zur Erzielung seiner freien Drehbarkeit beim Meßlauf hochgebockt. Um das zu messende Rad auf die erforderliche Drehzahl zu bringen, wird das Friktionsrad gegen den Reifen, gedrückt und die erforderliche Drehzahl durch den eingeschalteten Antriebsmotor hergestellt. Dabei kann der Antriebsmotor vor oder nach dem Heranfahren an den Reifen eingeschaltet werden.

Dabei ist in vielen Fällen nicht gewährleistet, daß die Anpreßkraft, mit der das Friktionsrad an den Reifen des zu messenden Kraftfahrzeugrades angedrückt wird, ausreicht, um das vom Antriebsmotor vermittelte Antriebsdrehmoment schlupffrei auf das zu messende Kraftfahrzeugrad zu übertragen. Ein schlupffreier Antrieb ist vor allem zur Schonung des Reifens gegen Reifenverschleiß, der bei Schlupf zwischen dem Friktionsrad und dem Kraftfahrzeugreifen auftritt, erwünscht. Ein derartiger Schlupf kann auch beim Abbremsen nach Ausschaltung des Antriebsmotors auftreten. Wenn der Motor noch eingeschaltet ist und das Friktionsrad abgebremst wird, kann dies zur Überlastung des Motors führen.

Aufgabe der Erfindung ist es daher, eine Vorrichtung der eingangs genannten Art zu schaffen, durch die ein reifenschonendes Beschleunigen und Abbremsen des zu messenden Kraftfahrzeugrades erzielt wird.

Diese Aufgabe wird erfindungsgemäß durch die kennzeichnenden Merkmale des Anspruchs 1 gelöst.

Auf diese Weise wird gewährleistet, daß beim Einschalten des Antriebsmotors das Friktionsrad mit einer so hohen Anpreßkraft an den Reifen des zu messenden Kraftfahrzeugrades angedrückt ist, daß ein schlupffreies Beschleunigen auf die für den Unwuchtmeßlauf erforderliche Drehzahl gewährleistet ist. Dadurch, daß der Antriebsmotor in Abhängigkeit dieser Anpreßkraft (Einschaltschwelle) einschaltbar ist, erfolgt ein automatisches Einschalten des Antriebsmotors bei Erreichen der gewünschten Anpreßkraft. Zum Ausschalten des Motors wird die Anpreßkraft verringert, und bei Erreichen eines entsprechenden Wertes für die Anpreßkraft (Ausschaltschwelle) reicht diese gerade noch aus, um das nunmehr vom deaktivierten Motor übertragene verringerte Antriebs- bzw. ein vom Motor oder sonstwie erzeugtes Bremsmoment schlupffrei zu übertragen.

In vorteilhafter Weise wird daher der Schwellenwert für die Anpreßkraft, bei welchem der Antriebsmotor eingeschaltet wird, höher bemessen als der Schwellenwert der Anpreßkraft, bei welchem der Antriebsmotor ausgeschaltet wird.

Um zu verhindern, daß aufgrund von geometrischen Radungleichförmigkeiten, insbesondere eines Reifenschlages, wie beispielsweise eines Seitenschlages des Reifens, der Motor fortlaufend ein- und ausgeschaltet wird, erfolgt die Bemessung der beiden Schwellenwerte für die Anpreßkraft und der Unterschied der beiden Schwellenwerte so, daß eine aus einer derartigen geometrischen Ungleichförmigkeit resultierende, periodisch sich wiederholende Anpreßkraftschwankung zwischen den beiden Schwellenwerten der Anpreßkraft liegt. Dadurch wirkt sich eine aus der Radungleichförmigkeit resultierende Hubhysterese der Antriebsscheibe nicht nachteilig auf den durch den Antriebsmotor vermittelten Antrieb aus. Es treten hierdurch keinerlei Motorschwingungen aufgrund ständigen Ein- und Ausschaltens des Motors auf. Zur Erkennung der vorhandenen Anpreßkraft wird bevorzugt ein Kraftsensor, der insbesondere als Druckkraftsensor ausgebildet ist, verwendet. Dieser Kraftsensor greift bevorzugt an einer Lagerung für das Friktionsrad an. Diese Lagerung kann als schwenkbare Trägerplatte ausgebildet sein, an welcher sowohl der Antriebsmotor als auch das an der Motorwelle befestigte Friktionsrad befestigt sind. Die Tragkonstruktion für das Friktionsrad bzw. für die aus Motor und Friktionsrad bestehende Antriebseinheit kann durch eine am Gehäuse bzw. am Gehäuserahmen abgestützte Druckfeder entgegen der Andrückrichtung beim Andrücken des Friktionsrades an das Kraftfahrzeugrad vorgespannt sein. Durch eine der Anpreßkraft proportionale Wegmessung können dann die beiden Schwellenwerte, nämlich die Einschaltschwelle für den Antriebsmotor und die Ausschaltschwelle für den Antriebsmotor, erfaßt werden.

Zur Erzielung der erforderlichen Anpreßkraft kann am Gehäuse bzw. Gehäuserahmen der Meßeinrichtung, die auf Rädern gelagert ist und an das zu messende Kraftfahrzeugrad herangefahren werden kann, ein zweiseitiger Hebel schwenkbar gelagert sein, dessen kurzer Hebelarm beim Verschwenken des langen Hebelarms mit den Rädern in Eingriff kommt, so daß mit relativ geringem, von Hand anzuwendenden Kraftaufwand das Friktionsrad an den Reifen des Kraftfahrzeugrades angepreßt werden kann, wobei dann bei Erreichen der Einschaltschwelle der Anpreßkraft der Antriebsmotor aktiviert wird.

Anhand der beiliegenden Figuren wird die Erfindung noch näher erläutert. Es zeigt:
- Fig. 1: in perspektivischer Darstellung ein Ausführungsbeispiel der Erfindung;
- Fig. 2: eine Seitenansicht der in Fig. 1 dargestellten Vorrichtung;
- Fig. 3: eine Ausführungsform für einen Drucksensor mit angeschlossener Motorsteuereinrichtung in Blockschaltbilddarstellung, welche beim in den Figuren 1 und 2 dargestellten Ausführungsbeispiel zur Anwendung kommen kann; und
- Fig. 4: eine Kurvendarstellung zur Erläuterung der Wirkungsweise des in der Fig. 3 dargestellten Drucksensors.

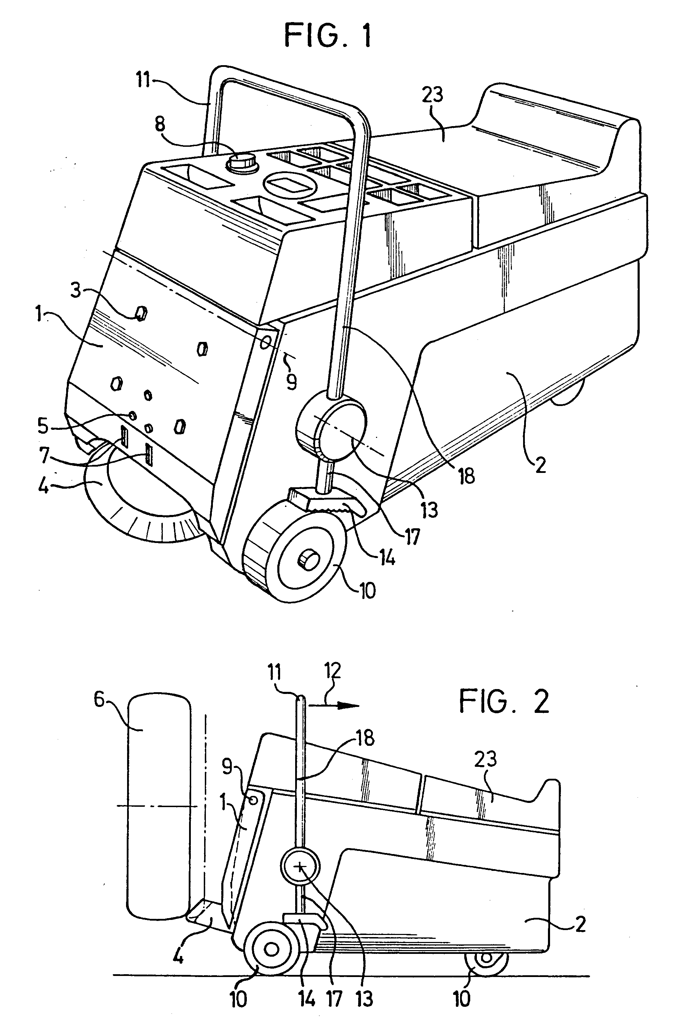

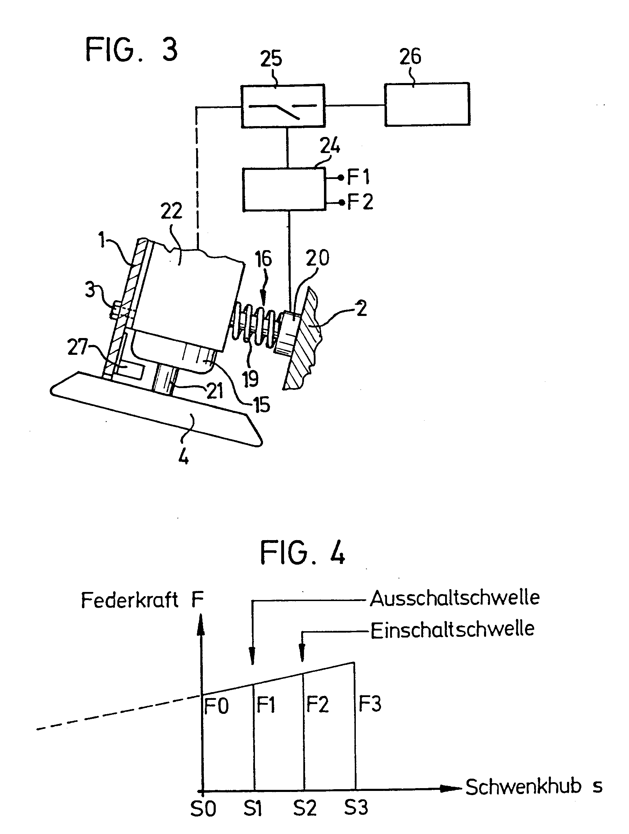

In den Figuren 1 und 2 ist eine Unwuchtmeßeinrichtung dargestellt, welche auf Laufrädern 10 verfahrbar in einem Gehäuse 2 untergebracht ist und zur Unwuchtmessung an einem frei drehbaren Kraftfahrzeugrad 6, das an einem nicht näher dargestellten Kraftfahrzeugrad montiert ist, verwendet werden kann. Die Unwuchtmeßeinrichtung besitzt ein Friktionsrad 4, das, wie die Fig. 3 zeigt, an einer Motorwelle 21 eines Antriebsmotors 15 befestigt ist. Der Antriebsmotor 15 ist mit Hilfe einer Motorhalterung 22 an der Innenseite einer als Trägerkörper 1 für die aus Antriebsmotor 15 und Friktionsrad 4 bestehende Antriebseinrichtung dienende Frontplatte des Gehäuses 2 befestigt. Als Befestigungsmittel 3 dienen beispielsweise Schrauben. Die als Trägerkörper 1 dienende Frontplatte ist an der Vorderseite des Gehäuses 2, welche dem zu messenden Kraftfahrzeugrad 6 zugewendet ist, schwenkbar um eine Schwenkachse 9 am Gehäuse 2 befestigt. Die Schwenkachse 9 ist am oberen Teil der Frontplatte vorgesehen. Die Frontplatte bzw. der Trägerkörper 1 erstreckt sich von der Schwenkachse 9 nach unten. An der Unterseite der Frontplatte ist eine Ausnehmung vorgesehen, durch die das Friktionsrad 4 teilweise ragt. Dieser Teil des Friktionsrades kann, wie es die Fig. 2 zeigt, in die unmittelbare Nähe an das zu messende Kraftfahrzeugrad 6 herangeführt werden und gegen das Kraftfahrzeugrad angedrückt werden, wie im einzelnen noch erläutert wird.

An der Rückseite der Frontplatte kann eine optische Abtasteinrichtung 27 (Fig. 3), welche durch zwei Schlitze 7 das angetriebene Kraftfahrzeugrad 6 optisch bei der Bestimmung der Unwuchtwinkellage abtastet, mit Hilfe von Befestigungsmitteln 5 befestigt sein. Mit Hilfe eines Wahlschalters 8 kann die Betriebsart für die Antriebseinrichtung (Antriebsmotor 15 und Friktionsrad 4) vorgewählt werden. Auf diese Weise läßt sich die Antriebsrichtung (links oder rechts) für das zu messende Kraftfahrzeugrd 6 einstellen. Die den Trägerkörper 1 bildende Frontplatte ist über eine Druckfeder 19 (Fig. 3), welche in Ruhelage eine Vorspannkraft FO (Fig. 4) vermittelt, vorgespannt. Mit Hilfe einer Wegmeßeinrichtung 20, welche eine Verschiebung des Friktionsrades beim Andrücken an das zu messende Kraftfahrzeugrad 6, wie noch erläutert wird, mißt, ist zwischen die auch die Lagerung des Friktionsrades 4 vermittelnde Motorhalterung 22 und das Gehäuse 2 bzw. einen fest mit dem Gehäuse 2 verbundenen Motorrahmen angeordnet. An diesem Rahmen bzw. am Gehäuse 2 ist auch die Druckfeder 19 abgestützt. Beim dargestellten Ausführungsbeispiel ist die Druckfeder 19 zwischen die Motorhalterung 22 und den Gehäuserahmen bzw. das Gehäuse 2 eingespannt. Der Drucksensor 16 bzw. die Druckfeder 19 und die Wegmeßeinrichtung 20 können auch direkt zwischen den Trägerkörper 1 und den Gehäuserahmen bzw. das Gehäuse 2 eingebaut sein.

Am Gehäuse 2 ist ferner ein zweiseitiger Hebel 11 vorgesehen. Am Ende eines kurzen Hebelarms 17 dieses zweiseitigen Hebels sind Mitnehmerschuhe 14 vorgesehen, die mit den vorderen Laufrädern 10 beim Verschwenken eines langen Hebelarms 18 des zweiseitigen Hebels 11 (in Pfeilrichtung 12) in Eingriff kommen. Der zweiseitige Hebel 11 ist, wie insbesondere aus Fig. 1 zu ersehen ist, bügelförmig ausgebildet und in einer Hebelschwenkachse 13 am Gehäuse 2 gelagert. An beiden Seiten des Gehäuses 2 sind die Mitnehmerschuhe 14 vorgesehen. Des gleichen befinden sich an beiden Seiten des Gehäuses jeweils ein kurzer und ein langer Hebelarm 17 und 18.

Im folgenden wird die Betriebsweise des in den Figuren dargestellten Ausführungsbeispiels der Erfindung noch näher erläutert.

Die dargestellte Vorrichtung kann bei inaktiviertem Motor, d. h. bei stillstehendem Friktionsrad 4, auf den Laufrädern 10 an das zu messende Kraftfahrzeugrad 6 herangerollt werden. Das Friktionsrad 4 liegt dabei in der ersten mit ausgezogenen Linien dargestellten Stellung der Fig. 2 am zu messenden Kraftfahrzeugrad an. Eine Bedienungsperson kann auf einem Sitz 23 Platz nehmen und den bügelförmigen zweiseitigen Hebel 11 bequem bedienen. Beim Verschwenken des Hebels 11 in Richtung des Pfeiles 12 in der Fig. 2 kommen die Mitnehmerschuhe 14 mit den vorderen Laufrädern 10 in Antriebsverbindung, so daß die Vorrichtung näher an den zu messenden Kraftfahrzeugreifen 6 herangerollt wird. Dabei wird die als Trägerkörper 1 für die Antriebseinrichtung (Antriebsmotor 15 und Friktionsrad 4) dienende Frontplatte um die Schwenkachse 9 gegen die Vorspannkraft FO der Druckfeder 19 verschwenkt, so daß das Friktionsrad 4 sich der strichliert dargestellten Stellung in der Fig. 2 nähert, wobei jedoch das Friktionsrad in dieser Stellung am strichliert dargestellten Kraftfahrzeugrad 6 immer stärker angedrückt wird. In der Fig. 4 ist die anwachsende, von der Druckfeder 19 vermittelte Anpreßkraft, welche der Federkraft F entspricht, gezeigt. Die Druckfeder 19 wird dabei verformt, wobei der Verformungsweg, welcher dem Schwenkhub s der Frontplatte (Trägerkörper 1) entspricht, von der Wegmeßeinrichtung 20 erfaßt wird, die ein dem im Millimeterbereich liegenden Schwenkhub s proportionales elektrisches Ausgangssignal liefert. Dieses Ausgangssignal ist außerdem proportional der von der Druckfeder vermittelten Anpreßkraft, mit der das Friktionsrad 4 gegen den Reifen des Kraftfahrzeugrades 6 gedrückt wird. Da die optische Abtasteinrichtung 27 an der Rückseite der Frontplatte bzw. des Trägerkörpers 1 angeordnet ist, führt diese optische Abtasteinrichtung 27, mit deren Hilfe die Unwuchtwinkellage beim Meßlauf bestimmt wird, diese Hubbewegung mit aus, so daß immer der gewünschte Lagebezug der optischen Abtasteinrichtung 27 gegenüber dem zu messenden Kraftfahrzeugrad 6 gewahrt bleibt.

Das Ausgangssignal der Wegmeßeinrichtung 20 wird einer Vergleichseinrichtung 24 zugeleitet, in die ferner ein Einschaltschwellenwert F2 (Fig. 4) für die Anpreßkraft eingegeben ist, bei welcher zwischen dem Friktionsrad 4 und dem Reifen des Kraftfahrzeugrades beim Antrieb kein Schlupf mehr auftritt. Sobald das von der Wegmeßeinrichtung 20 abgegebene elektrische Signal dem Einschaltschwellenwert F2 entspricht, liefert die Vergleichseinrichtung 24 ein Ausgangssignal,durch welches eine Schalteinrichtung 25, die insbesondere als Relais ausgebildet sein kann und normalerweise in geöffnetem Zustand sich befindet, in den geschlossenen Zustand gesteuert wird. Hierdurch wird ein Stromkreis geschlossen, und der Antriebsmotor 15 wird von einer Stromversorgungseinrichtung 26 über die geschlossene Schalteinrichtung 25 mit Strom versorgt und aktiviert. Bei eingeschaltetem Motor wird über das angedrückte Friktionsrad 4 ohne Schlupf das zu messende Kraftfahrzeugrad 6 auf die gewünschte Drehzahl für die Unwuchtmessung beschleunigt. Die Andruckkraft kann durch Weiterverschwenkung des Hebels 11 in Pfeilrichtung 12 bis auf einen Endwert F3 (Fig. 4) dabei erhöht werden.

Zur Beendigung des Meßlaufs wird der zweiseitige Hebel 11 entgegen der Pfeilrichtung 12 zurückverschwenkt, so daß die von der Druckfeder 19 vermittelte Anpreßkraft sich verringert und bei Erreichen eines Wertes F1 (Fig. 4) einen Ausschaltschwellenwert erreicht. Bei diesem Ausschaltschwellenwert gibt die Wegmeßeinrichtung 20 ein einem Schwenkhub S1 entsprechendes elektrisches Signal ab, welches in der Vergleichseinrichtung 24 mit einem der Ausschaltschwelle F1 entsprechenden Wert verglichen wird und bei Erreichen dieses Wertes die Schalteinrichtung 25 in den geöffneten Zustand steuert. Hierdurch wird die Speisung des Antriebsmotors 15 unterbrochen. Die bei dem Ausschaltschwellenwert F1 vorhandene Anpreßkraft des Friktionsrades 4 an dem Kraftfahrzeugrad 6 ist so bemessen, daß kein Schlupf bei der sich dann ergebenden Antriebsverringerung bzw. dem auftretenden Bremsmoment auftritt.

Der Schalthub bzw. die Differenz zwischen der Einschaltschwelle F 2 und der Ausschaltschwelle F1 ist so bemessen, daß auch bei einem maximalen Reifenschlag kein fortlaufendes Ein- und Ausschalten des Antriebsmotors 15 stattfindet. Das heißt, eine durch einen Reifenschlag verursachte Hubhysterese des Friktionsrades 4 wirkt sich nicht aus.

## Patentansprüche

1. Vorrichtung zum Antreiben eines zur Unwuchtermittlung, insbesondere hochgebockten, an einem Kraftfahrzeug montierten Kraftfahrzeugrades (6) mit einem von einem Antriebsmotor (15) angetriebenen Friktionsrad (4), das zum Antreiben des Kraftfahrzeugrades auf eine für einen Unwuchtmeßvorgang erforderliche Drehzahl an das Kraftfahrzeugrad andrückbar ist, dadurch gekennzeichnet, daß der Antriebsmotor (15) in Abhängigkeit von der Anpreßkraft, mit der das Friktionsrad (4) an das Kraftfahrzeugrad (6) andrückbar ist, ein- oder ausschaltbar ist, daß die Anpreßkraft so bemessen ist, daß beim Einschalten das vom Antriebsmotor (15) vermittelte Antriebsdrehmoment und beim Ausschalten ein verringertes Antriebsmoment bzw. ein Bremsmoment schlupffrei auf das Kraftfahrzeugrad übertragen wird.

2. Vorrichtung nach Anspruch 1, dadurch gekennzeichnet, daß zwei Schwellenwerte (F1, F2) für die Anpreßkraft vorgesehen sind, und daß der Antriebsmotor (15) bei dem höheren (F2) der beiden Schwellenwerte eingeschaltet und bei dem niedrigeren (F1) der beiden Schwellenwerte ausgeschaltet ist.

3. Vorrichtung nach Anspruch 1 oder 2, dadurch gekennzeichnet, daß die beiden Schwellenwerte (F1, F2) der Anpreßkraft und der Unterschied der beiden Schwellenwerte so bemessen sind, daß eine aus einer geometrischen Radungleichförmigkeit resultierende periodisch sich wiederholende Anpreßkraftschwankung innerhalb des Bereichs der beiden Schwellenwerte (F1, F2) der Anpreßkraft liegt.

4. Vorrichtung nach einem der Ansprüche 1 bis 3, dadurch gekennzeichnet, daß an die Lagerung des Friktionsrades (4) ein Kraftsensor (16) zur Messung der Anpreßkraft gekoppelt ist.

5. Vorrichtung nach Anspruch 4, dadurch gekennzeichnet, daß der Kraftsensor (16) als Druckkraftsensor ausgebildet ist.

6. Vorrichtung nach Anspruch 4 oder 5, dadurch gekennzeichnet, daß der Kraftsensor (16) eine Druckfeder (19) sowie eine Wegmeßeinrichtung (20) aufweist, die beim Anpressen des Friktionsrades (4) an das zu messende Kraftfahrzeugrad (6) in Richtung oder gegen die Richtung der Federkraft der Druckfeder (19) einen dem Anpreßdruck proportionalen gemessenen Hubweg erfaßt.

7. Vorrichtung nach einem der Ansprüche 4 bis 6, dadurch gekennzeichnet, daß der Kraftsensor (16) an einem schwenkbar gelagerten Trägerkörper (1) für das Friktionsrad (4) angreift.

8. Vorrichtung nach Anspruch 7, dadurch gekennzeichnet, daß der Trägerkörper (1) als Frontplatte ausgebildet ist, die schwenkbar an einem Gehäuse bzw. Gehäuserahmen (2) an einer dem zu messenden Kraftfahrzeugrad (6) zugekehrten Frontseite gelagert ist.

9. Vorrichtung nach einem der Ansprüche 1 bis 8, dadurch gekennzeichnet, daß an dem Gehäuse bzw. Gehäuserahmen (2), an welchem die das Friktionsrad (4) und den Antriebsmotor (15) enthaltende Antriebseinrichtung gelagert ist, ein zweiseitiger Hebel (11) schwenkbar gelagert ist, dessen kurzer Hebelarm (17) mit am Gehäuse bzw. Gehäuserahmen (2) gelagerten Rädern (10), die zum Fahren des Gehäuses bzw. Gehäuserahmens dienen, beim Verschwenken des langen, von Hand betätigbaren Hebelarms (18) in Antriebsverbindung bringbar sind.

10. Vorrichtung nach einem der Ansprüche 1 bis 9, dadurch gekennzeichnet, daß durch Betätigung des langen Hebelarms (18) die jeweils erforderliche Anpreßkraft (Schwellenwert F2 bzw. Schwellenwert F1) für das Friktionsrad (4) am zu messenden Kraftfahrzeugrad (6) erzielbar ist.

11. Vorrichtung nach einem der Ansprüche 1 bis 10, dadurch gekennzeichnet, daß eine optische Abtasteinrichtung (27) zum Abtasten des zu messenden Kraftfahrzeugrades (6) am Trägerkörper (1) befestigt ist.

## Claims

1. Apparatus for driving a motor vehicle wheel (6) which is mounted on a motor vehicle, in particular being jacked up for the purposes of determining unbalance, comprising a friction wheel (4) which is driven by a drive motor (15) and which can be pressed against the motor vehicle wheel for driving the motor vehicle wheel at a speed of rotation required for an unbalance measuring operation, characterised in that the drive motor (15) can be switched on or off in dependence on the pressure force with which the friction wheel (4) can be pressed against the motor vehicle wheel (6), that the pressure force is of such a magnitude that, when the drive motor is switched on, the drive torque produced by the drive motor (15) is transmitted in a slip-free manner to the motor vehicle wheel and when the drive motor is switched off a reduced drive moment or a braking moment is transmitted in a slip-free manner to the motor vehicle wheel.

2. Apparatus according to claim 1 characterised in that two threshold values (F1, F2) are provided for the pressure force, and that the drive motor (15) is switched on at the higher (F2) of the two threshold values and switched off at the lower (F1) of the two threshold values.

3. Apparatus according to claim 1 or claim 2 characterised in that the two threshold values (F1, F2) of the pressure force and the difference between the two threshold values are such that a periodically recurring fluctuation in the pressure force which results from a geometrical irregularity of the wheel lies within the range of the two threshold values (F1, F2) of the pressure force.

4. Apparatus according to one of claims 1 to 3 characterised in that a force sensor (16) for measuring the pressure force is coupled to the mounting of the friction wheel (4).

5. Apparatus according to claim 4 characterised in that the force sensor (16) is in the form of a pressure force sensor.

6. Apparatus according to claim 4 or claim 5 characterised in that the force sensor (16) has a compression spring (19) and a travel measuring means (20) which, when the friction wheel (4) is pressed against the motor vehicle wheel (6) to be measured, in the direction of or opposite to the direction of the spring force of the compression spring (19), detects a measured stroke movement which is proportional to the pressure force.

7. Apparatus according to one of claims 4 to 6 characterised in that the force sensor (16) engages a pivotably mounted carrier body (1) for the friction wheel (4).

8. Apparatus according to claim 7 characterised in that the carrier body (1) is in the form of a front plate which is pivotably mounted to a housing or housing frame (2) at a front side which is towards the motor vehicle wheel (6) to be measured.

9. Apparatus according to one of claims 1 to 8 characterised in that a two-sided lever (11) is pivotably mounted on the housing or housing frame (2) on which is mounted the drive means including the friction wheel (4) and the drive motor (15), the shorter lever arm (17) of which lever (11) can be brought into driving engagement with wheels (10) which are mounted on the housing or housing frame (2) and which serve to move the housing or housing frame, upon pivotal movement of the long lever arm (18) which can be actuated by hand.

10. Apparatus according to one of claims 1 to 9 characterised in that the respectively required pressure force (threshold value F2 or threshold value F1) for the friction wheel (4) against the motor vehicle wheel (6) to be measured can be achieved by actuation of the long lever arm (18).

11. Apparatus according to one of claims 1 to 10 characterised in that an optical sensing means (27) for sensing the motor vehicle wheel (6) to be measured is secured to the carrier body (1).

## Revendications

1. Dispositif pour entraîner une roue (6) montée sur un véhicule automobile, notamment soulevée au cric (cales ou chevalets) pour la détermination du balourd, comportant une roue de friction (4) qui est entraînée par un moteur d'entraînement (15) et peut être repoussée contre la roue du véhicule automobile pour l'entraînement de cette dernière à une vitesse de rotation nécessaire pour l'opération de mesure du balourd, caractérisé par le fait que le moteur d'entraînement (15) peut être activé ou désactivé en fonction de la force de serrage, avec laquelle la roue de friction (4) est repoussée contre la roue (6) du véhicule automobile, et que la force de serrage est dimensionnée de manière que lors de l'application ou de la suppression du couple d'entraînement transmis par le moteur d'entraînement (15), un couple d'entraînement réduit ou un couple de freinage est transmis sans glissemènt au la roue du véhicule automobile.

2. Dispositif suivant la revendication 1, caractérisé par le fait qu'il est prévu deux valeurs de seuil (F1, F2) pour la force de serrage, et que le moteur d'entraînement (15) est activé pour celle (F2) des deux valeurs de seuil, qui est la plus élevée, et est arrêté pour celle (F1) des deux valeurs de seuil, qui est la plus faible.

3. Dispositif suivant la revendication 1 ou 2, caractérisé par le fait que les deux valeurs de seuil (F1, F2) de la force de serrage et la différence entre les deux valeurs de seuil sont dimensionnées de telle sorte qu'une variation de la force de serrage, qui se répète périodiquement et résulte de la non uniformité géométrique de la roue, se situe dans la gamme des deux valeurs de seuil (F1, F2) de la force de serrage.

4. Dispositif suivant l'une des revendications 1 à 3, caractérisé par le fait qu'un capteur de force (16) servant à mesurer la force de serrage est accouplé au support de la roue de friction (4).

5. Dispositif suivant la revendication 4, caractérisé par le fait que le capteur de force (16) est réalisé sous la forme d'un capteur de force de compression.

6. Dispositif suivant la revendication 4 ou 5, caractérisé par le fait que le capteur de force (16) possède un ressort de pression (19) ainsi qu'un dispositif de mesure de distance (20), qui, lors du serrage de la roue de friction (4) contre la roue à mesurer (6) du véhicule automobile, dans la direction en sens opposé de la force du ressort de pression (19), détecte une course de déplacement mesurée proportionnelle à la pression de serrage.

7. Dispositif suivant l'une des revendications 4 à 6, caractérisé par le fait que le capteur de force (16) attaque un corps de support (1) monté pivotant, pour la roue de friction (4).

8. Dispositif suivant la revendication 7, caractérisé par le fait que le corps de support (1) est réalisé sous la forme d'une plaque avant, qui est montée de manière à pouvoir pivoter sur un logement ou un cadre de logement (2), sur une face avant tournée vers la roue à mesurer (6) du véhicule.

9. Dispositif suivant l'une des revendications 1 à 8, caractérisé par le fait que sur le logement ou le cadre de logement (2), sur lequel est monté le dispositif d'entraînement qui contient la roue de friction (4) et le moteur d'entraînement (15), est monté pivotant un levier (11) en deux éléments, dont le bras le plus court (17) peut être raccordé, selon une liaison motrice, à des roues (10) montées sur le logement ou le cadre de logement (2) qui sont utilisés pour déplacer le logement ou le cadre de logement, lors du pivotement du long bras (18) du levier qui peut être actionné manuellement.

10. Dispositif suivant l'une des revendications 1 à 9, caractérisé par le fait que la force de serrage respectivement nécessaire (valeur de seuil F2 ou valeur de seuil F1) pour la roue de friction (4) sur la roue à mesurer (6) du véhicule automobile peut être obtenue sous l'effet de l'actionnement du long bras (18) du levier.

11. Dispositif suivant l'une des revendications 1 à 10, caractérisé par le fait qu'un dispositif d'exploration optique (27) servant à explorer la roue à mesurer (6) du véhicule automobile est fixé au corps de support (1).
